# EUROPÄISCHE PATENTSCHRIFT

(11) **EP 4 360 427 B1**
(45) Veröffentlichungstag und Bekanntmachung des Hinweises auf die Patenterteilung: **30.09.2026**
(21) Anmeldenummer: 23401038.7
(22) Anmeldetag: 09.10.2023
(51) Int. Cl.: A01C 7/20, A01B 73/04, A01C 15/00

(54) **LANDWIRTSCHAFTLICHE VERTEILMASCHINE ZUM AUSBRINGEN VON SAATGUT, DÜNGE- UND/ODER PFLANZENSCHUTZMITTEL**
AGRICULTURAL DISTRIBUTOR FOR DISPENSING SEEDS, FERTILIZER AND/OR PLANT PROTECTION AGENTS
MACHINE D'ÉPANDAGE AGRICOLE POUR ÉPANDRE DES SEMENCES, ENGRAIS ET/OU AGENT DE PROTECTION DES PLANTES

(30) Priorität: 24.10.2022 DE 102022127967
(43) Veröffentlichungstag der Anmeldung: 01.05.2024
(60) Teilanmeldung: 25195838.5 / 4 623 687; 25198660.0
(73) Patentinhaber: Amazonen-Werke H. Dreyer SE & Co. KG, 49205 Hasbergen (DE)
(72) Erfinder: Brinkmann, Stefan, 49143 Bissendorf-Natbergen (DE); Bruns, Nicolas, 26125 Oldenburg (DE)

(56) Entgegenhaltungen:
- EP-B1- 2 361 007
- WO-A1-2021/080493
- WO-A1-2023/138737
- US-A1- 2011 100 656
- US-A1- 2020 359 545

## Beschreibung

Die Erfindung betrifft eine landwirtschaftliche Verteilmaschine, wie eine Anhängesämaschine, zum Ausbringen von Saatgut, Dünge- und/oder Pflanzenschutzmittel und zum Anhängen an eine landwirtschaftliche Zugmaschine.

Derartige anhängbare Verteilmaschinen sind einachsig bzw. mit zwei Achsen in einer Achsreihe oder mehrachsig bzw. mit mehreren Achsreihen ausgestaltet.

Eine mehrachsige Verteilmaschine ist beispielsweise in den Druckschriften US 2011/100656 A1 oder WO 2021/080493 A1 beschrieben.

Dabei sind einachsige Verteilmaschinen auf eine zulässige Achslast von bis zu 10 Tonnen beschränkt. Oberhalb von 10 Tonnen bedarf eine anhängbare Verteilmaschine mehrere Achsen bzw. muss diese mehrachsig ausgestaltet sein, um eine Stra-ßenzulassung zu erhalten. Mehrachsige Verteilmaschinen haben jedoch den Nachteil, dass diese z. B. einen größeren Wendekreis aufweisen und somit umständlicher als einachsige Verteilmaschinen zu manövrieren sind.

Daher ist es Aufgabe der vorliegenden Erfindung, eine landwirtschaftliche Verteilmaschine, wie z. B. eine Anhängesämaschine und/oder eine Anhängefeldspritze, zum Ausbringen von Saatgut, Dünge- und/oder Pflanzenschutzmittel und zum Anhängen an eine landwirtschaftliche Zugmaschine anzugeben, welche kostengünstig und materialsparend herstellbar ist sowie eine hohe Manövrierbarkeit aufweist.

Diese Aufgabe wird erfindungsgemäß durch die Merkmale des unabhängigen Patentanspruchs gelöst. Weitere vorteilhafte Weiterbildungen sind Gegenstand der Unteransprüche.

Die vorliegende Erfindung umfasst eine landwirtschaftliche Verteilmaschine, wie z. B. eine Anhängesämaschine und/oder eine Anhängefeldspritze, zum Ausbringen von Saatgut, Dünge- und/oder Pflanzenschutzmittel und zum Anhängen an eine landwirtschaftliche Zugmaschine. Es kann aber auch sein, dass die Verteilmaschine für andere Arten gezogener, landwirtschaftlicher Arbeitsmaschinen ausgebildet ist.

Die landwirtschaftliche Verteilmaschine bzw. die Verteilmaschine weist einen Rahmen auf, der einen linken und einen rechten Rahmenteil umfasst.

Dabei unterteilt der linke und rechte Rahmenteil den Rahmen quer zur Arbeitsrichtung der Verteilmaschine in zwei Teile. Die Unterteilung kann auch in zwei gleiche Teile erfolgen, die z. B. bezogen auf ihre Grundkonstruktion symmetrisch oder achssymmetrisch zueinander ausgebildet sein können. Dabei können sich die zwei gleichen Teile beispielsweise durch unterschiedliche Kabelführungen oder kleine Anbauten für spezielle Aktorik oder Zubehörteile unterscheiden, jedoch sind diese in mechanischer Hinsicht auf das Weiterleiten und Aufnahmen von Kräften gleich ausgestaltet und insofern bezogen auf ihre Grundkonstruktion symmetrisch oder achssymmetrisch zueinander ausgebildet.

Bei einer Arbeitsrichtung kann es sich um die Richtung handeln, in welche die Verteilmaschine von einer Zugmaschine gezogen wird, sodass die Verteilmaschine z. B. ihre Aufgabe auf einem Acker/Ackerboden bzw. auf einem Feld erfüllen kann. Im Rahmen der Erfindung wird jedoch eine Fahrtrichtung der Verteilmaschine während Transportfahrten im Straßenverkehr betrachtet.

Ferner umfasst die Verteilmaschine eine erste und eine zweite Radverbindungseinheit, die beide mit dem Rahmen verbunden sind und mit deren Hilfe sich die Verteilmaschine über ein daran befestigbares Rad auf einem Untergrund, beispielsweise zum Fahren oder z. B. in einem geparkten Zustand, abstützt. Bei dem Untergrund kann es sich um ein Feld bzw. Ackerboden und/oder um eine Straße handeln.

Die erste Radverbindungseinheit ist am linken Rahmenteil und die zweite Radverbindungseinheit ist am rechten Rahmenteil angeordnet.

Jede Radverbindungseinheit weist nur eine einzige Radachse auf, an welcher ein Rad anordenbar ist. Dabei kann die Radachse die Drehachse bilden, um welche das Rad rotieren kann.

Ferner umfasst die erste Radverbindungseinheit alle Radachsen des linken Rahmenteils und die zweite Radverbindungseinheit alle Radachsen des rechten Rahmenteils. Erfindungsgemäß weist die erste Radverbindungseinheit dabei nur eine einzige Radachse auf bzw. ist die wenigstens eine Radachse die einzige Radachse der ersten Radverbindungseinheit. Ferner weist die zweite Radverbindungseinheit erfindungsgemäß nur eine einzige Radachse auf bzw. ist die wenigstens eine Radachse die einzige Radachse der zweiten Radverbindungseinheit.

Erfindungsgemäß sind die einzige Radachse der ersten Radverbindungseinheit und die einzige Radachse der zweiten Radverbindungseinheit in Arbeitsrichtung der Verteilmaschine zueinander versetzt angeordnet. Anders ausgedrückt, sind die Radachsen der ersten und zweiten Radverbindungseinheit nicht in einer Achsreihe angeordnet. Nochmals mit anderen Worten ausgedrückt, sind die Radachsen zueinander versetzt angeordnet. Auf diese Weise werden also die Radachsen aus einer Achsreihe gelöst und sind zueinander versetzt angeordnet. Bei nicht der Erfindung entsprechenden Ausgestaltungen mit mehreren Radachsen pro Radverbindungseinheit ist es möglich, dass auch bereits die Radachsen einer Radverbindungseinheit, beispielsweise der ersten und/oder der zweiten Radverbindungseinheit, zueinander versetzt angeordnet sind. Dementsprechend können zusätzlich die Radachsen der ersten Radverbindungseinheit und/oder zusätzlich die Radachsen der zweiten Radverbindungseinheit zueinander versetzt angeordnet sein.

Des Weiteren kann die einzige Radachse der ersten Radverbindungseinheit um 10 bis 60 mm, beispielsweise um 35 mm, zur einzigen Radachse der zweiten Radverbindungseinheit versetzt angeordnet sein. Dadurch kann eine zweiachsige Verteilmaschine geschaffen werden, bei der die einzigen Radachsen der ersten und zweiten Radverbindungseinheit zusammen keine Achsreihe bilden bzw. nicht in einer Achsreihe angeordnet sind. Dies erhöht die Manövrierbarkeit der Verteilmaschine.

Zusätzlich oder alternativ können die einzige Radachse der ersten Radverbindungseinheit und die einzige Radachse der zweiten Radverbindungseinheit zueinander einen Abstand zwischen 10 und 60 mm, beispielsweise von 35 mm, aufweisen. Dieser Abstand erlaubt eine gute Manövrierbarkeit der Verteilmaschine und eine hervorragende mechanische Aufnahme und Abstützung von auf die Verteilmaschine einwirkenden Kräften.

Erfindungsgemäß weisen die einzige Radachse der ersten Radverbindungseinheit und die einzige Radachse der zweiten Radverbindungseinheit zueinander einen Abstand von maximal 1 Meter auf.

Außerdem ist es möglich, dass die einzigen Radachsen der ersten und zweiten Radverbindungseinheit gleichorientiert zueinander ausgerichtet sind. So kann die Verteilmaschine auf einfache Weise einer Richtung folgen, in die sie gezogen wird. Ferner kann vorgesehen sein, dass die einzigen Radachsen der ersten und zweiten Radverbindungseinheit quer zur Arbeitsrichtung ausgerichtet sind. So können also die einzigen Radachsen der ersten und zweiten Radverbindungseinheit quer zur Fahrt- bzw. Arbeitsrichtung der Verteilmaschine orientiert sein.

Des Weiteren kann die erste und/oder zweite Radverbindungseinheit eine ungefederte und/oder ungedämpfte Verbindung zum Rahmen aufweisen.

Zusätzlich oder ergänzend kann ein Träger der Verteilmaschine und/oder die erste und/oder die zweite Radverbindungseinheit ungefedert und/oder ungedämpft mit dem Rahmen verbunden sein.

Ferner kann die erste und/oder die zweite Radverbindungseinheit mit dem Rahmen form- und/oder kraft- und/oder stoffschlüssig verbunden sein.

Zudem kann die Verteilmaschine einen Träger aufweisen, welcher die erste und/oder zweite Radverbindungseinheit mit dem Rahmen verbindet. Folglich kann die Verteilmaschine einen Träger pro Radverbindungseinheit aufweisen.

Als Zusatz oder als Alternative kann der Träger mit dem Rahmen form- und/oder kraft-und/oder stoffschlüssig verbunden sein.

Ergänzend oder alternativ kann der Träger mit der ersten und/oder zweiten Radverbindungseinheit form- und/oder kraft- und/oder stoffschlüssig verbunden sein.

Des Weiteren ist denkbar, dass der Träger wenigstens eine Befestigungseinrichtung aufweist, mit deren Hilfe die erste und/oder zweite Radverbindungseinheit an dem Träger befestigt ist.

Die Befestigungseinrichtung kann ausgebildet sein, unterschiedliche Positionen der ersten und/oder zweiten Radverbindungseinheit relativ zum Träger zu ermöglichen. Somit ist es auf einfache Weise möglich, die Radachse der ersten Radverbindungseinheit und die Radachse der zweiten Radverbindungseinheit zueinander versetzt anzuordnen.

Auch kann die Befestigungseinrichtung wenigstens ein Bohrloch mit oder ohne Gewinde aufweisen. Durch dieses Bohrloch kann z. B. eine Schraube geführt werden, welche die erste oder zweite Radverbindungseinheit mit dem Träger kraftschlüssig verbinden kann. Dies erleichtert ein versetztes Anordnen der Radachsen der Radverbindungseinheiten.

Erfindungsgemäß weist die erste und/oder zweite Radverbindungseinheit pro Radachse eine Bremseinrichtung, wie z. B. eine Trommelbremse oder eine Scheibenbremse, auf.

Die erste und/oder zweite Radverbindungseinheit kann pro Radachse ein Rad oder mehrere Räder, jeweils mit z. B. Felge und Bereifung, aufweisen.

Auch kann das Rad oder können mehrere Räder an der zugehörigen Radachse befestigt sein, sodass das Rad / die Räder relativ zum Rahmen und/oder zu einem Träger der Verteilmaschine drehen kann / können.

Dabei kann das Rad bzw. jedes Rad als sogenannte Bodenwalze zur Rückverfestigung von Boden bzw. von Ackerboden ausgebildet sein. Alternativ oder zusätzlich kann das Rad einem Fahrwerk der Verteilmaschine, insbesondere zwecks Transportfahrten, zugeordnet sein.

Des Weiteren weist die Verteilmaschine eine Zugdeichsel auf, die am Rahmen zum Anhängen der Verteilmaschine an eine landwirtschaftliche Zugmaschine angeordnet ist.

Die Zugdeichsel ist zentral, beispielsweise mittig, am Rahmen angeordnet und kann in Arbeitsrichtung ausgerichtet sein.

Ferner kann die Verteilmaschine eine erste und/oder eine zweite Rahmenerweiterung aufweisen.

Die erste und/oder zweite Rahmenerweiterung kann gelenkig und/oder schwenkbar um Schwenkachsen ausgebildet sein, wobei die Schwenkachsen in Arbeitsrichtung verlaufen oder ausgerichtet sind. Die gelenkige oder schwenkbare Anordnung kann die Breite der Verteilmaschine verringern, sodass ein Bewegen der Verteilmaschine auf öffentlichen Wegen und Straßen möglich wird.

Die erste Rahmenerweiterung kann schwenkbar am Rahmen und seitlich neben dem Rahmen bzw. schwenkbar am linken Rahmenteil und seitlich neben dem linken Rahmenteil angeordnet sein.

Die zweite Rahmenerweiterung kann schwenkbar am Rahmen und seitlich neben dem Rahmen bzw. schwenkbar am rechten Rahmenteil am und seitlich neben dem rechten Rahmenteil angeordnet sein.

Zudem können am Rahmen und/oder an der ersten und/oder an der zweiten Rahmenerweiterung Bodenbearbeitungswerkzeuge zur Bodenbearbeitung und/oder Bodenwalzen zur Rückverfestigung von Ackerboden angeordnet sein.

In einer Arbeitsstellung der Verteilmaschine kann die erste und/oder zweite Rahmenerweiterung so verschwenkt sein, dass die Rahmenerweiterung oder die Rahmenerweiterungen und der Rahmen in einer Ebene angeordnet sind oder einen Winkel von 180 Grad zueinander einschließen, wodurch ein Ackerboden von der Verteilmaschine bearbeitbar ist.

In einer Transportstellung der Verteilmaschine kann die erste und/oder zweite Rahmenerweiterung so verschwenkt sein, dass die Rahmenerweiterung oder die Rahmenerweiterungen und der Rahmen einen Winkel von wenigstens 60 Grad, beispielsweise 90 Grad, zueinander einschließen. Dadurch ist die Verteilmaschine auf öffentlichen Straßen und Wegen bewegbar.

Ferner kann der Rahmen eine Arbeitsbreite von maximal 3 Metern aufweisen, sodass die zulässige Transportbreite zum Transport der Verteilmaschine auf öffentlichen Straßen und Wegen gewährleistbar ist.

Nachfolgend wird der oben dargestellte Erfindungsgedanke nochmals bzw. ergänzend mit anderen/weiteren Worten ausgedrückt.

Dieser Gedanke betrifft - vereinfacht dargestellt - eine Anordnung der Fahrwerksachsen einer gezogenen Sämaschine bzw. einer anhängbaren Sämaschine bzw. einer Anhängesämaschine bzw. einer Anhängefeldspritze bzw. einer Verteilmaschine. Nach bisherigem Stand der Technik werden quer zur Fahrtrichtung bzw. Arbeitsrichtung in einer Flucht bzw. in einer Achsreihe angeordnete Fahrwerksachsen verwendet. In einer Achsreihe angeordnete Fahrwerksachsen werden dabei gemäß von Verordnungen als Einzelachsen mit zulässigen Achslasten mit bis zu 10 Tonnen eingestuft.

Damit Sämaschinen bzw. landwirtschaftliche Verteilmaschinen, wie Anhängesämaschinen, zum Ausbringen von Saatgut, Dünge- und/oder Pflanzenschutzmittel und zum Anhängen an eine landwirtschaftliche Zugmaschine auch mit Doppelachsen und mit entsprechend höheren zulässigen Achslasten (oberhalb von 10 Tonnen) zugelassen werden können, können gemäß der vorliegenden Erfindung die Fahrwerksachsen bzw. die einzige Radachse auf einer ersten Seite der Verteilmaschine und die einzige Radachse auf einer zweiten Seite der Verteilmaschine um 10 bis 60 mm oder beispielsweise um 35 mm zueinander versetzt angeordnet werden. Dadurch kann eine zwei- oder mehrachsige Verteilmaschine geschaffen werden.

Dabei können die erste und zweite Seite die Verteilmaschine quer zur Arbeitsrichtung der Verteilmaschine in zwei Teile unterteilen.

Nachstehend wird die Erfindung anhand eines Ausführungsbeispiels in Verbindung mit zugehörigen Zeichnungen näher erläutert. Hierbei zeigen schematisch:
- Fig. 1A: eine perspektivische Ansicht auf eine landwirtschaftliche Verteilmaschine in einer Arbeitsstellung;
- Fig. 1B: eine Draufsicht auf einen vergrößerten Abschnitt der landwirtschaftlichen Verteilmaschine aus Figur 1A;
- Fig. 2: eine Vergrößerung auf eine Radverbindungseinheit der landwirtschaftlichen Verteilmaschine aus Figur 1B in einer perspektivischen Darstellung;
- Fig. 3A: eine perspektivische Ansicht auf die landwirtschaftliche Verteilmaschine aus Figur 1A im Übergang von einer Arbeitsstellung in eine Transportstellung oder umgekehrt; und
- Fig. 3B: eine perspektivische Ansicht auf die landwirtschaftliche Verteilmaschine aus Figur 1A in einer Transportstellung.

In der nachfolgenden Beschreibung werden gleiche Bezugszeichen für gleiche Gegenstände verwendet.

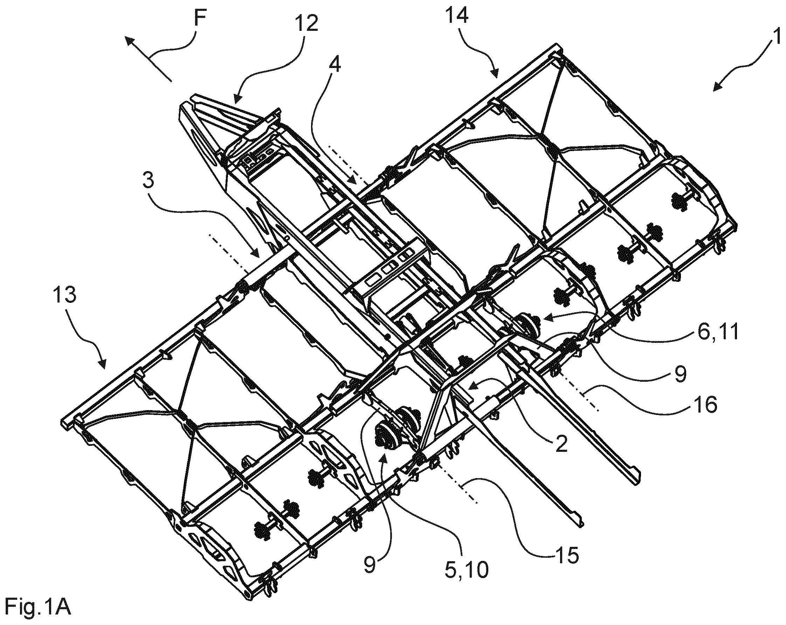

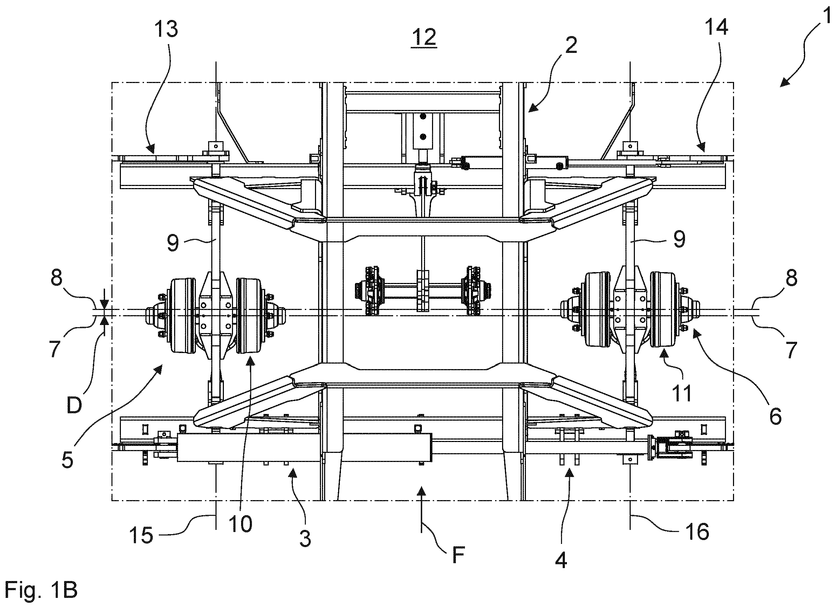

Figur 1A zeigt eine perspektivische Ansicht auf eine landwirtschaftliche Verteilmaschine 1 in einer Arbeitsstellung und Figur 1B eine Draufsicht auf einen vergrößerten Abschnitt der landwirtschaftlichen Verteilmaschine 1 aus Figur 1A.

Genauer dargestellt zeigt Figur 1A eine landwirtschaftliche Verteilmaschine 1 bzw. eine Anhängesämaschine zum Ausbringen von Saatgut und/oder Düngemittel und zum Anhängen an eine landwirtschaftliche Zugmaschine.

An dieser Stelle sei explizit erwähnt, dass die Verteilmaschine 1 auch für andere Arten gezogener, landwirtschaftlicher Arbeitsmaschinen ausgebildet sein kann.

Die Verteilmaschine 1 hat einen Rahmen 2, der einen linken und einen rechten Rahmenteil 3, 4 umfasst.

Der linke und rechte Rahmenteil 3, 4 unterteilt den Rahmen 2 quer zur Arbeitsrichtung F der Verteilmaschine 1 in zwei gleiche Teile.

Ferner hat die Verteilmaschine 1 eine erste und eine zweite Radverbindungseinheit 5, 6, die beide mit dem Rahmen 2 verbunden sind und mit deren Hilfe sich die Verteilmaschine 1 über ein daran befestigbares Rad (nicht dargestellt) auf einem Feld/Ackerboden und auf einer Straße zum Fahren abstützt.

Dabei ist die erste Radverbindungseinheit 5 am linken Rahmenteil 3 und die zweite Radverbindungseinheit 6 am rechten Rahmenteil 4 angeordnet.

Ferner umfasst jede Radverbindungseinheit 5, 6 eine Radachse 7, 8, an welcher ein Rad anordenbar ist.

Die erste Radverbindungseinheit 5 umfasst hierbei alle Radachsen des linken Rahmenteils 3 und die zweite Radverbindungseinheit 6 alle Radachsen des rechten Rahmenteils 4. Anders ausgedrückt hat die erste Radverbindungseinheit 5 nur eine einzige Radachse 7 und die zweite Radverbindungseinheit 6 nur eine einzige Radachse 8.

Mit Blick auf Figur 1B wird ersichtlich, dass die Radachse 7 der ersten Radverbindungseinheit 5 und die Radachse 8 der zweiten Radverbindungseinheit 6 in Arbeitsrichtung F der Verteilmaschine 1 zueinander versetzt angeordnet sind. So sind also die Radachsen nicht in einer gemeinsamen Achsreihe angeordnet bzw. sind die Radachsen aus einer Achsreihe gelöst und zueinander versetzt.

Dabei ist die Radachse 7 der ersten Radverbindungseinheit 5 um 10 bis 60 mm oder, wie beispielsweise in Figur 1B dargestellt, um 35 mm zur Radachse 8 der zweiten Radverbindungseinheit 6 versetzt angeordnet. Dadurch kann eine zwei- oder mehrachsige Verteilmaschine 1 geschaffen werden.

Anders ausgedrückt, können die Radachse 7 der ersten Radverbindungseinheit 5 und die Radachse 8 der zweiten Radverbindungseinheit 6 zueinander einen Abstand D zwischen 10 und 60 mm oder beispielsweise von 35 mm aufweisen.

Nochmals mit anderen Worten ausgedrückt, können die Radachse 7 der ersten Radverbindungseinheit 5 und die Radachse 8 der zweiten Radverbindungseinheit 6 zueinander einen Abstand D von maximal 1 Meter aufweisen.

Wie in Figur 1B gezeigt, sind die Radachsen 7, 8 der ersten und zweiten Radverbindungseinheit 5, 6 gleichorientiert zueinander ausgerichtet. Zudem sind die Radachsen 7, 8 der ersten und zweiten Radverbindungseinheit 5, 6 quer zur Arbeitsrichtung F ausgerichtet.

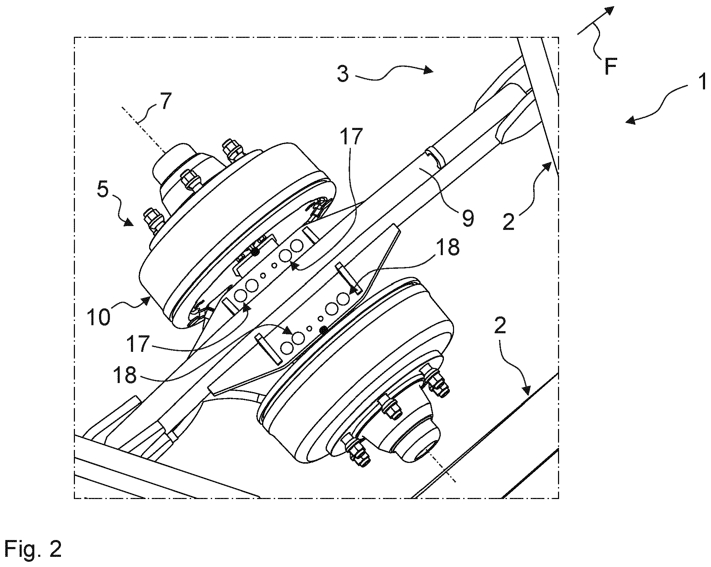

Figur 2 zeigt eine Vergrößerung auf eine Radverbindungseinheit 5 der landwirtschaftlichen Verteilmaschine 1 aus Figur 1B in einer perspektivischen Darstellung.

Obwohl nur eine Radverbindungseinheit 5 in Figur 2 dargestellt ist, gelten nachstehende Ausführungen für beide.

So umfassen die erste und auch die zweite Radverbindungseinheit 5, 6 eine ungefederte und ungedämpfte Verbindung zum Rahmen 2. Anders ausgedrückt, sind ein Träger 9 der Verteilmaschine 1 und die erste 5 und die zweite Radverbindungseinheit 6 ungefedert und ungedämpft mit dem Rahmen 2 verbunden.

Ferner sind die erste und die zweite Radverbindungseinheit 5, 6 mit dem Rahmen 2 kraft- und stoffschlüssig verbunden.

Genauer ausgeführt, zeigt gemäß Figur 2 - wie schon angedeutet, dass die Verteilmaschine 1 einen Träger 9 umfasst, welcher die erste bzw. die zweite Radverbindungseinheit 5, 6 mit dem Rahmen 2 verbindet. Dabei hat die Verteilmaschine 1 pro Radverbindungseinheit 5, 6 einen Träger 9.

Der exemplarisch gezeigte Träger 9 in Figur 2 ist mit dem Rahmen 2 stoffschlüssig verbunden, wobei - anders ausgedrückt - der Träger 9 mit der ersten bzw. zweiten Radverbindungseinheit 5, 6 kraftschlüssig verbunden ist.

Figur 2 zeigt ferner, dass der Träger 9 zwei Befestigungseinrichtungen 17, 18 aufweist, mit deren Hilfe die erste bzw. auch die zweite Radverbindungseinheit 5, 6 an dem Träger 9 befestigt ist.

Dabei ist jede Befestigungseinrichtung 17, 18 ausgebildet, unterschiedliche Positionen der ersten bzw. zweiten Radverbindungseinheit 5, 6 relativ zum Träger 9 zu ermöglichen. Somit ist es auf einfache Weise möglich, die Radachse 7 der ersten Radverbindungseinheit 5 und die Radachse 8 der zweiten Radverbindungseinheit 6 zueinander versetzt anzuordnen.

Genau genommen weist jede Befestigungseinrichtung 17, 18 mehrere Bohrlöcher ohne Gewinde auf. Durch diese kann eine Schraube geführt werden, welche die erste bzw. zweite Radverbindungseinheit 5, 6 mit dem Träger 9 kraftschlüssig verbindet.

Gemäß Figur 1B hat die erste und zweite Radverbindungseinheit 5, 6 pro Radachse 7, 8 eine Bremseinrichtung 10, 11, wie z. B. eine Trommelbremse.

Dabei kann die erste und zweite Radverbindungseinheit 5, 6 pro Radachse 7, 8 zwei Räder (nicht dargestellt), jeweils mit z. B. Felge und Bereifung, aufweisen. Jedes Rad kann an der zugehörigen Radachse 7, 8 befestigt sein, sodass jedes Rad relativ zum Rahmen 2 und zum Träger 9 drehen kann. Dabei kann jedes Rad als Bodenwalze zur Rückverfestigung von Boden bzw. von Ackerboden ausgebildet sein.

Wie aus Figur 1A ersichtlich, umfasst die Verteilmaschine 1 eine Zugdeichsel 12, die am Rahmen 2 zum Anhängen der Verteilmaschine 1 an eine landwirtschaftliche Zugmaschine angeordnet ist. Dabei ist die Zugdeichsel 12 zentral bzw. mittig am Rahmen 2 angeordnet.

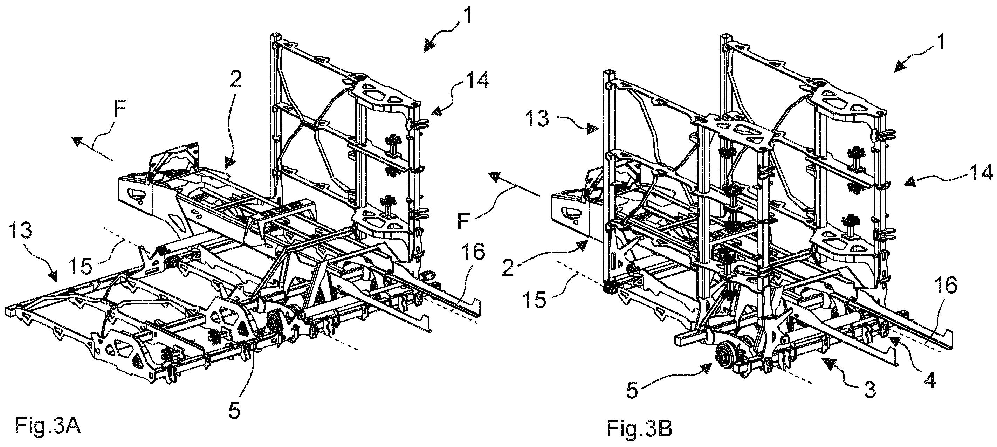

Figur 3A zeigt eine perspektivische Ansicht auf die landwirtschaftliche Verteilmaschine 1 aus Figur 1A im Übergang von einer Arbeitsstellung in eine Transportstellung oder umgekehrt. Figur 3B zeigt eine perspektivische Ansicht auf die landwirtschaftliche Verteilmaschine 1 aus Figur 1A in einer Transportstellung.

Gemäß den Figuren 3A, 3B und 1A hat die Verteilmaschine 1 eine erste und eine zweite Rahmenerweiterung 13, 14, die gelenkig bzw. schwenkbar um Schwenkachsen 15, 16 ausgebildet sind. Dabei verlaufen die Schwenkachsen 15, 16 in Arbeitsrichtung F.

Genauer geschildert ist die erste Rahmenerweiterung 13 schwenkbar am Rahmen 2 und seitlich neben dem Rahmen 2 bzw. schwenkbar am linken Rahmenteil 3 und seitlich neben dem linken Rahmenteil 3 angeordnet.

Die zweite Rahmenerweiterung 14 ist schwenkbar am Rahmen 2 und seitlich neben dem Rahmen 2 bzw. schwenkbar am rechten Rahmenteil 4 und seitlich neben dem rechten Rahmenteil 4 angeordnet.

Am Rahmen 2 bzw. an der ersten und an der zweiten Rahmenerweiterung 13, 14 können Bodenbearbeitungswerkzeuge zur Bodenbearbeitung (nicht dargestellt) und Bodenwalzen zur Rückverfestigung von Ackerboden (nicht dargestellt) angeordnet sein.

In der Arbeitsstellung der Verteilmaschine 1 gemäß Figur 1A und auch teilweise in Figur 3A sind die erste und zweite Rahmenerweiterung 13, 14 so verschwenkt, dass die Rahmenerweiterungen 13, 14 und der Rahmen 2 in einer Ebene angeordnet sind bzw. schließen die Rahmenerweiterungen 13, 14 und der Rahmen 2 einen Winkel von 180 Grad zueinander ein. Dadurch ist ein Ackerboden von der Verteilmaschine 1 bearbeitbar.

In der Transportstellung, die in Figur 3B gezeigt wird, sind die erste und zweite Rahmenerweiterung 13, 14 so verschwenkt, dass die Rahmenerweiterungen 13, 14 und der Rahmen 2 einen Winkel von 90 Grad zueinander einschließen. Somit ist die Verteilmaschine 1 auf öffentlichen Straßen und Wegen bewegbar.

Anders formuliert hat der Rahmen 2 eine Arbeitsbreite von maximal 3 Metern, sodass die zulässige Transportbreite zum Transport der Verteilmaschine 1 auf öffentlichen Straßen und Wegen gewährleistbar ist.

### Bezugszeichenliste

- 1: landwirtschaftliche Verteilmaschine
- 2: Rahmen
- 3: linker Rahmenteil
- 4: rechter Rahmenteil
- 5: erste Radverbindungseinheit
- 6: zweite Radverbindungseinheit
- 7: Radachse
- 8: Radachse
- 9: Träger
- 10: Bremseinrichtung
- 11: Bremseinrichtung
- 12: Zugdeichsel
- 13: erste Rahmenerweiterung
- 14: zweite Rahmenerweiterung
- 15: Schwenkachse
- 16: Schwenkachse
- 17: Befestigungseinrichtung
- 18: Befestigungseinrichtung

- D: Abstand
- F: Arbeitsrichtung

## Patentansprüche

1. Landwirtschaftliche Verteilmaschine (1) zum Ausbringen von Saatgut, Dünge-und/oder Pflanzenschutzmittel und zum Anhängen an eine landwirtschaftliche Zugmaschine aufweisend:
*einen Rahmen (2) mit einer zentral, beispielsweise mittig, angeordneten Zugdeichsel (12), der einen linken und einen rechten Rahmenteil (3, 4) umfasst,*
*wobei der linke und rechte Rahmenteil (3, 4) den Rahmen (2) quer zur Fahrtrichtung (F) der Verteilmaschine (1) in zwei Teile unterteilt,*
*eine erste und eine zweite Radverbindungseinheit (5, 6), die beide mit dem Rahmen (2) verbunden sind und mit deren Hilfe sich die Verteilmaschine (1) über ein daran befestigbares Rad auf einem Untergrund abstützt,*
*wobei die erste Radverbindungseinheit (5) am linken Rahmenteil (3) und die zweite Radverbindungseinheit (6) am rechten Rahmenteil (4) angeordnet ist,*
*wobei die erste Radverbindungseinheit (5) nur eine einzige Radachse (7) aufweist und die zweite Radverbindungseinheit (6) nur eine einzige Radachse* (8) *aufweist, an welcher ein Rad anordenbar ist,*
*wobei die erste und*/*oder zweite Radverbindungseinheit (5, 6) pro Radachse* (7, 8) *eine Bremseinrichtung (10, 11) aufweist, und*
*wobei die erste Radverbindungseinheit (5) alle Radachsen des linken Rahmenteils (3) und die zweite Radverbindungseinheit (6) alle Radachsen des rechten Rahmenteils (4) umfasst,*
wobei die einzige Radachse (7) der ersten Radverbindungseinheit (5) und
die einzige Radachse (8) der zweiten Radverbindungseinheit (6) in Fahrtrichtung (F) der Verteilmaschine (1) während Transportfahrten im Straßenverkehr zueinander versetzt angeordnet sind, wobei die Radachsen (7, 8) der ersten und zweiten Radverbindungseinheit (5, 6) nicht in einer Achsreihe angeordnet sind, und wobei die einzige Radachse (7) der ersten Radverbindungseinheit (5) und
die einzige Radachse (8) der zweiten Radverbindungseinheit (6) zueinander einen Abstand (D) von maximal 1 Meter aufweisen.

2. Landwirtschaftliche Verteilmaschine nach einem der vorangehenden Ansprüche,
• wobei die einzigen Radachsen (7, 8) der ersten und zweiten Radverbindungseinheit (5, 6) gleichorientiert zueinander ausgerichtet sind, und
• wobei die einzigen Radachsen (7, 8) der ersten und zweiten Radverbindungseinheit (5, 6) quer zur Fahrtrichtung (F) ausgerichtet sind.

3. Landwirtschaftliche Verteilmaschine nach einem der vorangehenden Ansprüche,
• wobei die erste und/oder zweite Radverbindungseinheit (5, 6) eine ungefederte und/oder ungedämpfte Verbindung zum Rahmen (2) aufweist,
und/oder
• wobei die erste (5) und/oder die zweite Radverbindungseinheit (6) ungefedert und/oder ungedämpft mit dem Rahmen (2) verbunden ist.

4. Landwirtschaftliche Verteilmaschine nach einem der vorangehenden Ansprüche,
• wobei die erste und/oder die zweite Radverbindungseinheit (5, 6) mit dem Rahmen (2) form- und/oder kraft- und/oder stoffschlüssig verbunden ist.

5. Landwirtschaftliche Verteilmaschine nach einem der vorangehenden Ansprüche,
• wobei die Verteilmaschine (1) einen Träger (9) aufweist, welcher die erste und/oder zweite Radverbindungseinheit (5, 6) mit dem Rahmen (2) verbindet.

6. Landwirtschaftliche Verteilmaschine nach Anspruch 5,
• wobei der Träger (9) wenigstens eine Befestigungseinrichtung (17, 18) aufweist, mit deren Hilfe die erste und/oder zweite Radverbindungseinheit (5, 6) an dem Träger (9) befestigt ist, und
• wobei die Befestigungseinrichtung (17, 18) ausgebildet ist, unterschiedliche Positionen der ersten und/oder zweiten Radverbindungseinheit (5, 6) relativ zum Träger (9) zu ermöglichen.

## Claims

1. Agricultural distribution machine (1) for spreading seed, fertilizer and/or plant protectant and for attaching to an agricultural tractor, the machine comprising:
*a frame (2) with a drawbar (12) arranged centrally, for example in the middle, which frame comprises a left and a right frame part (3, 4),*
*wherein the left and right frame parts (3, 4) divide the frame (2) transversely to the direction of travel (F) of the distribution machine (1) into two parts,*
*a first and a second wheel connection unit (5, 6), both of which are connected to the frame (2) and by means of which the distribution machine (1) supports itself on a subsurface via a wheel that can be fastened to it,*
*wherein the first wheel connection unit (5) is arranged on the left frame part (3) and the second wheel connection unit (6) is arranged on the right frame part (4),*
*wherein the first wheel connection unit (5) has only a single wheel axle (7)*
*and the second wheel connection unit (6) has only a single wheel axle (8) on which a wheel can be arranged,*
*wherein the first and*/*or second wheel connection unit (5, 6) has one braking device (10, 11) per wheel axle (7, 8), and*
*wherein the first wheel connection unit (5) comprises all wheel axles of the left frame part (3) and the second wheel connection unit (6) comprises all wheel axles of the right frame part (4),*
wherein
the single wheel axle (7) of the first wheel connection unit (5) and
the single wheel axle (8) of the second wheel connection unit (6) are arranged offset from each other in the direction of travel (F) of the distribution machine (1) during transport journeys in road traffic, wherein the wheel axles (7, 8) of the first and second wheel connection units (5, 6) are not arranged in an axle row, and wherein
the single wheel axle (7) of the first wheel connection unit (5) and
the single wheel axle (8) of the second wheel connection unit (6) have a distance (D) of a maximum of 1 meter from each other.

2. Agricultural distribution machine according to any of the preceding claims,
• wherein the single wheel axles (7, 8) of the first and second wheel connection units (5, 6) are aligned in the same orientation to each other, and
• wherein the single wheel axles (7, 8) of the first and second wheel connection units (5, 6) are aligned transversely to the direction of travel (F).

3. Agricultural distribution machine according to any of the preceding claims,
• wherein the first and/or second wheel connection unit (5, 6) has an unsprung and/or undamped connection to the frame (2),
and/or
• wherein the first (5) and/or the second wheel connection unit (6) is connected to the frame (2) in an unsprung and/or undamped manner.

4. Agricultural distribution machine according to any of the preceding claims,
• wherein the first and/or the second wheel connection unit (5, 6) is connected to the frame (2) by form-fit and/or force-fit and/or material-fit connection.

5. Agricultural distribution machine according to any of the preceding claims,
• wherein the distribution machine (1) has a support (9) which connects the first and/or second wheel connection unit (5, 6) to the frame (2).

6. Agricultural distribution machine according to claim 5,
• wherein the support (9) has at least one fastening device (17, 18) by means of which the first and/or second wheel connection unit (5, 6) is fastened to the support (9), and
• wherein the fastening device (17, 18) is designed to allow different positions of the first and/or second wheel connection unit (5, 6) relative to the support (9).

## Revendications

1. Machine de distribution agricole (1) destinée à l'épandage de semences, d'engrais et/ou de produits phytosanitaires et à l'attelage à un tracteur agricole, présentant :
*un châssis (2) comportant un timon (12) disposé au centre, par exemple au milieu, et comprenant une partie de châssis gauche et une partie de châssis droite (3, 4),*
*dans laquelle les parties de châssis gauche et droite (3, 4) divisent le châssis (2) en deux parties transversalement par rapport au sens de déplacement (F) de la machine de distribution (1),*
*une première et une seconde unité de liaison de roues (5, 6), lesquelles sont reliées au châssis (2) et à l'aide desquelles la machine de distribution (1) s'appuie sur le sol par l'intermédiaire d'une roue pouvant y être fixée,*
*dans laquelle la première unité de liaison de roues (5) est disposée sur la partie de châssis gauche (3) et la seconde unité de liaison de roues (6) est disposée sur la partie de châssis droite (4),*
*dans laquelle la première unité de liaison de roues (5) ne présente qu'un unique essieu (7)*
*et la seconde unité de liaison de roues (6) ne présente qu'un unique essieu (8) sur lequel une roue peut être disposée,*
*dans laquelle la première et*/*ou la seconde unité de liaison de roues (5, 6) présente, par essieu (7, 8), un dispositif de freinage (10, 11), et*
*dans laquelle la première unité de liaison de roues (5) présente tous les essieux de la partie de châssis gauche (3) et la seconde unité de liaison de roues (6) présente tous les essieux de la partie de châssis droite (4),*
dans laquelle
l'unique essieu (7) de la première unité de liaison de roues (5) et
l'unique essieu (8) de la seconde unité de liaison de roues (6) sont disposés en étant décalés l'un par rapport à l'autre dans le sens de déplacement (F) de la machine de distribution (1) lors de déplacements sur route, dans laquelle les essieux (7, 8) des première et seconde unités de liaison de roues (5, 6) ne sont pas disposés en une rangée d'essieux, et dans laquelle
l'unique essieu (7) de la première unité de liaison de roues (5) et
l'unique essieu (8) de la seconde unité de liaison de roues (6) présentent un écart (D) de 1 mètre au maximum l'un par rapport à l'autre.

2. Machine de distribution agricole selon l'une des revendications précédentes,
• dans laquelle les uniques essieux (7, 8) des première et seconde unités de liaison de roues (5, 6) sont orientés dans la même direction l'un par rapport à l'autre, et
• dans laquelle les uniques essieux (7, 8) des première et seconde unités de liaison de roues (5, 6) sont orientés perpendiculairement au sens de marche (F).

3. Machine de distribution agricole selon l'une des revendications précédentes,
• dans laquelle la première et/ou la seconde unité de liaison de roues (5, 6) présentent une liaison non suspendue et/ou non amortie avec le châssis (2),
et/ou
• dans laquelle la première (5) et/ou la seconde unité de liaison de roues (6) sont reliées au châssis (2) sans suspension et/ou sans amortissement.

4. Machine de distribution agricole selon l'une des revendications précédentes,
• dans laquelle la première et/ou la seconde unité de liaison de roues (5, 6) sont reliées au châssis (2) par complémentarité de forme et/ou à force et/ou par liaison de matière.

5. Machine de distribution agricole selon l'une des revendications précédentes,
• dans laquelle la machine de distribution (1) présente un support (9) qui relie la première et/ou la seconde unité de liaison de roues (5, 6) au châssis (2).

6. Machine de distribution agricole selon la revendication 5,
• dans laquelle le support (9) présente au moins un dispositif de fixation (17, 18) à l'aide duquel la première et/ou la seconde unité de liaison de roues (5, 6) sont fixées au support (9), et
• dans laquelle le dispositif de fixation (17, 18) est conçu pour permettre différentes positions de la première et/ou de la seconde unité de liaison de roues (5, 6) par rapport au support (9).
